# EUROPEAN PATENT APPLICATION

(11) **EP 1 175 070 A1**
(43) Date of publication of application: **23.01.2002**
(21) Application number: 00610074.7
(22) Date of filing: 18.07.2000
(51) Int. Cl.: H04M 1/02

(54) **An electronic device with electrically connected hinged parts**

(71) Applicant: Telefonaktiebolaget L M Ericsson (Publ), 126 25 Stockholm (SE)
(72) Inventor: Brännmo, Henrik, 245 92 Staffanstorp (SE)
(74) Representative: Sigh, Erik

(57) **Abstract**

An electronic device comprises a first part (1) and a second part (2) that are hingedly connected via a hinge having a hinge axis. The electronic device also comprises an electrically conducting, flexible element (14) wound around the hinge axis for electrically connecting a PCB (5) of the first part (1) with a PCB (7) of the second part (2), said flexible element (14) having a first end electrically connected to the PCB (5) of the first part (1). The second end of the flexible element (14) is connected to an axle element (9) that is rotatably mounted in relation to the first part (1) and is provided with an opening (20) into which a tap (8) is inrotatably and dismountably arranged, said tap (8) extending from the second part (2) and being electrically connected to the PCB (7) of the second part (2), said axle element (9) being adapted for electrically connecting the flexible element (14) with the tap (8).

## Description

### Technical field

The invention relates to an electronic device comprising a first part and a second part that are hingedly connected via a hinge having a hinge axis, said first and second parts each being provided with a printed circuit board (PCB), said electronic device further comprising an electrically conducting, flexible element wound around the hinge axis for electrically connecting the PCB of the first part with the PCB of the second part, said flexible element having a first end electrically connected to the PCB of the first part.

### Related prior art

In order to save space and to reduce the size of electronic equipment, many electronic devices are today provided with a hinged part provided with some electronic components, such as a microphone etc. Such hinged parts may be in the form of covers, which are known especially from mobile radio stations, such as mobile telephones, where a part of the front is hingedly connected to the casing of the phone. In its closed position, the hinged part - the cover - often covers and thereby protects the keypad of the phone, and the cover itself may contain a microphone or other electronic components that must be electrically connected to other electronic components provided in the main part of the phone.

A number of solutions have been suggested in order to electrically connect the electronic components in the main part with the electronic components of the hinged cover.

US-A-5,027,394 discloses a connection between electronic components and printed circuit boards, PCBs, of the two parts by a tape-shaped flexible printed circuit board, flexible PCB, which is wound at least two times around the shaft of the hinge. The flexible PCB is provided with soldering sections at each end thereof, each soldering section being provided for soldering the end of the flexible PCB to a PCB provided in one of the two hingedly connected parts. Each of the soldering sections is connected to the main part of the flexible PCB by a narrow strip positioned at one side of the flexible PCB. Therefore, in use, the flexible PCB is exposed to an uneven strain, which, over time, may cause the flexible PCB to break due to fatigue. Moreover, the two parts are difficult to separate once the ends of the flexible PCB have been soldered to the PCB of each part.

Similar uses of a flexible PCB for connection through a hinge are known from US-A-5,141,446 and JP-A-9093317.

### Object of the invention

It is an object of the invention to provide an electronic device having two hinged parts that are electronically connected through the hinge, said electronic connection means being readily separable if the two parts of the electronic device are to be separated, e.g. for repair of the device.

### Summary of the invention

The object of the invention is achieved by arranging the device mentioned in the opening paragraph in such a way that a second end of the flexible element is connected to an axle element that is rotatably mounted in relation to the first part and has a centre axis that coincides with the hinge axis, said axle element being provided with an opening into which a tap is inrotatably and dismountably arranged, said tap extending from the second part and being electrically connected to the PCB of the second part, said axle element being adapted for electrically connecting the flexible element with the tap.

Thereby it is obtained that the electrical hinge connection is divided into two pieces, one piece being firmly connected to the first part of the electronic device and the second piece being firmly connected to the second part of the electronic device. The two pieces are interconnected via the axle element which is an integrated part of the hinge of the first part. However, since the tap connected to the second part is dismountably mounted in the axle element as described, it can be readily dismounted therefrom by sliding it in the direction of the hinge axis.

Likewise, when the two parts of the electronic device are separated, they may easily be assembled with the tap slidably engaging the opening of the axle element and thereby electronically connecting the PCB of the first part with the PCB of the second part.

Preferably, the opening in the axle element has the shape of a slot that extends in the direction of the hinge axis. This means that the tap extending from the second part can easily be slided into the slot-shaped opening when the second part is connected with the first part.

In order to facilitate the mounting of the tap connected to the second part into the opening in the axle element, the tap can be rigid.

In a preferred embodiment the opening of the axle element has a radial opening into which the second end of the flexible element is slidably mounted. This accomplishes a simple structure of the axle element since the same opening or slot is used for mounting of the tap as well as the second end of the flexible element.

Electrically connected contacts are preferably provided inside the opening or slot for electrically connecting contact points provided on the second end of the flexible element and on the tap, respectively. Preferably the contacts in the opening or slot are arranged on opposite faces of the opening or slot. This arrangement of the contacts calls for a simple and yet reliable structure of the axle element in which the flexible element as well as the tap can be slidably mounted into the slot and be contacted there on their opposite sides. Preferably the flexible element and the tap are trapped between the contacts provided on the opposite sides of the opening or slot.

In a preferred embodiment, the flexible element is a flexible PCB provided with contact points at each end thereof. The ends of the flexible PCB may be provided as rigid parts in order to facilitate mounting thereof and in a preferred embodiment the first end of the flexible element is secured to the PCB of the first part by means of a screw.

The electronic device may be a mobile radio station, such as a mobile telephone, and the first part may be a housing of the mobile radio station and the second part a hingedly connected cover provided with a microphone.

It shall be emphasised that the term "comprise/comprising" when used in this specification is taken to specify the presence of stated features, integers, steps or components but does not preclude the presence or addition of one or more other features, integers, steps components or groups thereof.

### Description of the drawings

The invention will be described in detail in the following with reference to the drawings in which
Fig. 1 shows a partially separated mobile telephone,
Fig. 2 shows in details the main parts of the hinge connection,
Fig. 3 shows a flexible PCB incorporated in the hinge connection, and
Fig. 4 shows a cross-section of the assembled hinge connection.

### Detailed description of an embodiment of the invention

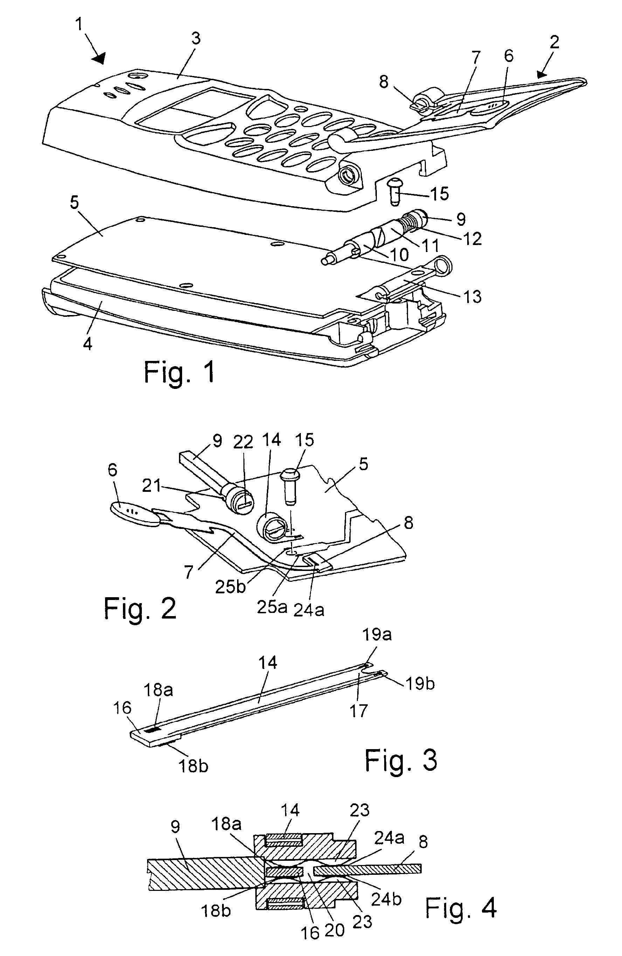

Fig. 1 shows a partially separated mobile telephone comprising a first part - the housing 1 - and a second part - the cover 2 - said first and second parts being hingedly connected. The housing 1 comprises a top part 3, a bottom part 4 and a main PCB 5 positioned between the top part 3 and the bottom part 4. Of course, the housing 1 comprises other components, but for the sake of simplicity only those parts that are relevant in relation to the invention are disclosed.

In the shown embodiment the cover 2 comprises a microphone 6 that is positioned at one end of a PCB 7 provided inside the cover. This PCB will in the following be referred to as the cover PCB 7. At the other end of the cover PCB a tap 8, which preferably is rigid, is provided, said rigid tab 8 being a part of the hinge connection as it will be described below.

The mechanical portion of the hinge between the housing 1 and the cover 2 may be of any known type. In the shown embodiment the hinge comprises an axle element 9, a first cam element 10, a second cam element 11, a helical spring 12 and a hinge support member 13. The hinge support member 13 is connected to the bottom part 4 of the housing 1 and the axle element 9 is mounted rotatably at the first end of the hinge support member 13. The axle element 9 is moreover connected inrotatably to the cover 2, thus it follows any movement of the cover 2. The first cam element 10 is inrotatably mounted in the hinge support member 13 but rotatably in relation to the axle element 9. The second cam element 11 is inrotatably but slidably mounted on the axle element 9 which extends through the centre of the second cam element 11. The helical spring 12 is positioned between a shoulder provided on the axle element 9 and the second cam element 11, biasing the second cam element 11 against the first cam element 10. The cam elements 10, 11 are provided with complementary V-shaped cams at their abutting ends.

Rotation of the cover 2 causes the cam elements 10, 11 to be rotated in relation to each other, thereby forcing the V-shaped cams to slide against each other and compress the helical spring 12. However, when the top points of the cams reach each other and continue beyond that point, the helical spring 12 expands and forces the cover 2 to open fully.

When closing the cover 2, the hinge mechanism operates in a similar manner.

Fig. 2 shows the essential parts of the electrical connection through the hinge in a preferred embodiment of the invention. The parts comprise the cover PCB 7 provided with a microphone 6 and a rigid tap 8, the axle element 9, the main PCB 5, a flexible element 14 and a screw 15. The main PCB 5 is preferably a traditional rigid PCB whereas the cover PCB 7 is a flexible PCB. The flexible element 14 is preferably also a flexible PCB, but other types of flexible, electrically connecting elements could be used.

The flexible element 14 is shown in greater detail in Fig. 3. It is made as a flexible PCB having at a first end thereof a rigid axle element connecting part 16 and at the other end a main PCB connecting part 17. The axle element connecting part 16 is provided with two contact points 18a, 18b at opposite sides thereof, and the main PCB connecting part 17 is shaped as a fork and is provided with two contact points 19a, 19b at the same side thereof. The contact point 18a is electrically connected to the contact point 19a and the contact point 18b is electrically connected to the contact point 19b. Before the flexible element 14 is mounted in the mobile telephone hinge, it is rolled up into the shape shown in Fig. 2.

Returning to Fig. 2, the electrically connecting means will be described in details. The axle element 9 is provided with a central opening in the shape of a slot 20 that has a first radial opening 21 at the side of the axle element 9, said first radial opening 21 being intended for receiving the axle element connecting part 16 of the flexible element 14, and a second opening 22 provided in the end of the axle element 9, said second opening 22 being intended for receiving the rigid tap 8 of the cover PCB 7.

Fig. 4 shows a cross section of the axle element 9 wherein the axle element connecting part 16 of the flexible element 14 and the rigid tap 8 of the cover PCB are mounted. The slot 20 is provided with contacts 23 that engage with the contact points 18a, 18b provided at each side of the axle element connecting part 16 and also with contact points 24a, 24b provided at each side of the rigid tap 8. Thus, the slot 20 is provided with electrically connecting means that provide for electrical connection between the cover PCB 7 and the flexible PCB 14.

A screw 15 is provided for connecting the flexible PCB 14 to the main PCB 5. As mentioned above, the flexible PCB is provided with a fork-shaped main PCB connecting part 17 having two contact points 19a, 19b positioned at the same side. Complementary contact points 25a, 25b are provided at the main PCB 5 and by means of the screw 15 the contact points 19a, 19b of the main PCB connecting part 17 can be firmly connected with the contact points 25a, 25b of the main PCB 5.

The screw preferably goes through the hinge support member 13 and into the bottom part 4 while squeezing the PCB connecting part 17 between the hinge support member 13 and the main PCB 5.

Mounting of the electrically connecting means is accomplished as follows:
- the flexible element 14 and the axle element 9 are connected by inserting the axle element connecting part 16 of the flexible element 14 into the slot 20 through the radial opening 21 of the axle element 9,
- the flexible element 14 is rolled up,
- the fork-shaped main PCB connecting part 17 of the flexible element 14 is connected to the main PCB 5 by means of a screw 15, and
- the cover PCB 7 is connected with the axle element 9 by inserting the rigid tap 8 of the cover PCB 7 into the slot 20 through the opening 22 of the axle element 9.

The first three steps are preferably performed during assembly of the housing 1 of the mobile telephone, i.e. the first and second cam elements 10, 11 and the helical spring 12 are connected to the axle element 9 to form the assembly shown in Fig. 1, and the assembly is mounted in the hinge support member 13. The flexible element 14 is connected to the axle element 9, rolled up, and the hinge support member 13 with the hinge mechanism is mounted on the main PCB 5 and the bottom part 4 of the housing 1 having the flexible element 14 secured to the main PCB 5 with a screw 15. The top part 3 of the housing 1 is mounted and the housing 1 is thus assembled.

Likewise, the cover 2 is assembled before it is mounted on the housing 1. Assembly of the cover 2 includes mounting of the cover PCB 7 in the cover 2 in such a way that the rigid tap 8 of the cover PCB 7 extends from the hinge part of the cover 2 as shown in Fig. 1.

When mounting the cover 2 with the housing 1, the rigid tap 8 of the cover PCB 7 is slidably mounted into the slot 20 provided in the axle element 9, thereby electrically connecting the cover PCB 7 with the main PCB 5 via the contacts 23 provided in the slot 20 in the axle element 9 and the contact points 18a, 18b and 23a, 23b provided on the flexible element 14 and the rigid tap 8, respectively.

Since the rigid tap 8 is only slidably mounted in the slot 20 provided in the axle element 9, the two parts - the housing 1 and the cover 2 - can be easily separated and assembled again if necessary.

The invention has been described with reference to the drawings that show a preferred embodiment of the invention. However, many variations may be performed without departing from the inventive idea. For instance, the flexible element 14 may be connected to the main PCB 5 by other means than a screw 15, e.g. by soldering or by using a plug. Furthermore, the flexible element 14 itself need not be a flexible PCB but might as well have the shape of a ribbon cable or other tape-like electrically conducting means.

The electrical contact between the axle element 9 and the flexible element 14 may also differ from the one shown.

## Claims

1. An electronic device comprising a first part (1) and a second part (2) that are hingedly connected via a hinge having a hinge axis, said first and second parts each being provided with a printed circuit board (PCB) (5, 7), said electronic device further comprising an electrically conducting, flexible element (14) wound around the hinge axis for electrically connecting the PCB (5) of the first part (1) with the PCB (7) of the second part (2), said flexible element (14) having a first end electrically connected to the PCB (5) of the first part (1), **characterised in that** a second end of the flexible element (14) is connected to an axle element (9) that is rotatably mounted in relation to the first part (1) and has a centre axis that coincides with the hinge axis, said axle element (9) being provided with an opening (20) into which a tap (8) is inrotatably and dismountably arranged, said tap (8) extending from the second part (2) and being electrically connected to the PCB (7) of the second part (2), said axle element (9) being adapted for electrically connecting the flexible element (14) with the tap (8).

2. A device according to claim 1, **characterised in that** the opening (20) in the axle element has the shape of a slot extending in the direction of the hinge axis.

3. A device according to claims 1 or 2, **characterised in that** the tap (8) extending from the second part (2) and being electrically connected to the PCB (7) of the second part (2) is rigid.

4. A device according to any one of claims 1-3, **characterised in that** the opening (20) of the axle element (9) has a radial opening (21) into which the second end of the flexible element (14) is slidably mounted.

5. A device according to claim 4, **characterised in that** electrically connected contacts (23) are provided inside the opening (20) in the axle element (9) for electrically connecting contact points (18a, 18b, 24a, 24b) provided on the second end of the flexible element (14) and on the tap (8), respectively.

6. A device according to claim 5, **characterised in that** the contacts (23) in the opening (20) in the axle element (9) are arranged on opposite faces of the opening (20).

7. A device according to any one of claims 1-6, **characterised in that** the flexible element (14) is a flexible PCB provided with contact points (18a, 18b, 19a, 19b) at each end thereof.

8. A device according to any one of claims 1-7, **characterised in that** the flexible element (14) is secured to the PCB (5) of the first part (1) by means of a screw (15).

9. A device according to any one of claims 1-8, **characterised in that** the device is a mobile radio station, such as a mobile telephone.

10. A device according to claim 7, **characterised in that** the first part (1) is a housing of the mobile radio station and the second part (2) is a hingedly connected cover provided with a microphone (6).
